Europäisches Patentamt

European Patent Office

Office européen des brevets

(11) Veröffentlichungsnummer: **0 396 978**
**A1**

(12) **EUROPÄISCHE PATENTANMELDUNG**

(21) Anmeldenummer: **90108016.8**

(22) Anmeldetag: **27.04.90**

(51) Int. Cl.⁵: **F16H 55/17, F16H 3/76**

(30) Priorität: **10.05.89 CH 1754/89**

(43) Veröffentlichungstag der Anmeldung:
**14.11.90 Patentblatt 90/46**

(84) Benannte Vertragsstaaten:
**AT BE CH DE ES FR GB IT LI NL SE**

(71) Anmelder: **Braunschweiler, Hans Georg**
**Nidelbadstrasse 80**
**CH-8803 Rüschlikon(CH)**

(72) Erfinder: **Braunschweiler, Hans Georg**
**Nidelbadstrasse 80**
**CH-8803 Rüschlikon(CH)**

(74) Vertreter: **Patentanwälte Schaad, Balass &**
**Partner**
**Dufourstrasse 101 Postfach**
**CH-8034 Zürich(CH)**

(54) **Kreisbogenförmiges Zahnsegment und Zahnradgetriebe mit einem solchen Zahnsegment.**

(57) Um den Radius des Kreisbogens, den das Zahnsegment (10) beschreibt, in vergleichsweise weiten Grenzen verändern zu können, sind einzelne, aufeinanderfolgend angeordnete und mindestens einen Zahn (12) tragende Zahnelemente (11) vorgesehen. Diese sind durch mindestens ein gespanntes, zugfestes, biegsames und einen Kreisbogen beschreibendes Kopplungselement zusammengehalten, das mit seinen Enden je in einem Endstück (28,29) verankert ist. Es sind Mittel (22,30,31,34-37) vorgesehen, um den Abstand der Endstücke (28,29) vom Mittelpunkt (Z) des Kreisbogens und damit dessen Radius zu verändern.

Fig. 2

EP 0 396 978 A1

**Kreisbogenförmiges Zahnsegment und Zahnradgetriebe mit einem solchen Zahnsegment**

Die vorliegende Erfindung betrifft ein kreisbogenförmiges Zahnsegment, sowie ein Zahnradgetriebe mit einem solchen Zahnsegment.

Ein kreisbogenförmiges Zahnsegment entspricht einem Teil des Umfanges eines (innen- oder ausserverzahnten) Stirnzahnrades. Das Übersetzungsverhältnis zwischen einem solchen Zahnsegment und einem mit diesem kämmenden Zahnrad ist konstant oder kann nur in sehr engen Grenzen variiert werden. Die Variation gelingt dann, wenn das Zahnsegment und das Zahnrad inbezug aufeinander um eine Umlaufachse in Umlauf gebracht werden und der Abstand der Eingriffsstelle zwischen dem Segment und dem Zahnrad einerseits und der Umlaufachse andererseits verändert wird. Diese Abstandsveränderung kann aber bei bekannten Zahnsegmenten der eingangs genannten Art nur innerhalb sehr enger Grenzen erfolgen, in denen die Umlaufachse noch in der Nähe des Mittelpunktes des Kreisbogens liegt.

Es ist daher eine Aufgabe der Erfindung, ein Zahnsegment zu schaffen, bei dem der Krümmungsradius des Kreisbogens in vergleichsweise weiten Grenzen veränderbar ist.

Diese Aufgabe wird dadurch gelöst, dass das vorgeschlagene Zahnsegment erfindungsgemäss die im Kennzeichen des Patentanspruches 1 umschriebenen Merkmale aufweist.

Dadurch, dass die Verzahnung des Zahnsegmentes in die Zahnelemente aufgeteilt ist, die durch das biegsame und zwischen den Endstücken gespannte Kopplungselement zusammengehalten sind, bleibt sich die vom Zahnsegment beschriebene Bogenlänge konstant, aber dessen Krümmungsradius lässt sich in vergleichsweise weiten Grenzen verändern.

Merkmale bevorzugter Ausführungsformen, die sowohl für aussen- als auch für innenverzahnte Zahnsegmente gelten, sind in den abhängigen Ansprüchen 2 bis 9 umschrieben.

Ein Zahnradgetriebe, für das das vorgeschlagene Zahnsegment besonders geeignet ist, ist im Oberbegriff des Patentanspruches 10 umschrieben und beispielsweise aus der EP-A-0 248 289 bekannt. Mit dem vorgeschlagenen Zahnsegment lässt sich der Aufbau des vorbekannten Getriebes dadurch wesentlich vereinfachen, wenn es die im Kennzeichen des Patentanspruches 10 umschriebenen Merkmale aufweist. Freilich besitzt ein solches Getriebe nicht mehr ein echt stufenlos veränderbares Übersetzungsverhältnis, aber dieses Übersetzungsverhältnis ist in so viel kleinen Stufen veränderbar, dass von "praktisch" stufenlos gesprochen werden kann.

Ausführungsbeispiele der Erfindung sind nachstehend anhand der Zeichnung näher beschrieben. Es zeigt:

Fig. 1 einen Schnitt längs der Linie I-I der Fig. 2 durch ein aussen verzahntes Zahnsegment mit fünfzehn Zähnen;

Fig. 2 einen Schnitt längs der Linie II-II der Fig. 1 in einer Stellung, bei der der Radius des vom Zahnsegment beschriebenen Kreisbogens am kleinsten ist;

Fig. 3 einen Schnitt ähnlich wie Fig. 2, jedoch in einer Stellung, in der der Radius des vom Zahnsegment beschriebenen Kreisbogens am grössten ist;

Fig. 4 eine schematische Darstellung eines Getriebes unter Verwendung eines nicht umlaufenden Zahnsegmentes gemäss Fig. 1-3;

Fig. 5 eine schematische Stirnansicht in Richtung des Pfeiles V des Getriebes der Fig. 4 in einer Extremstellung des Zahnsegmentes;

Fig. 6 eine Stirnansicht ähnlich wie Fig. 5, bei der jedoch das Zahnsegment eine andere Extremstellung einnimmt; und

Fig. 7 eine schematische Darstellung ähnlich wie Fig. 4 eines Getriebes, bei dem das Zahnsegment umläuft.

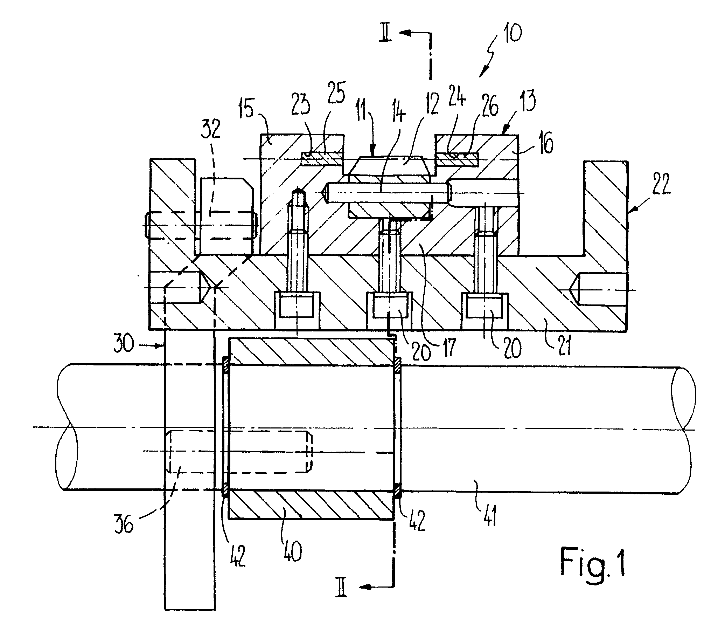

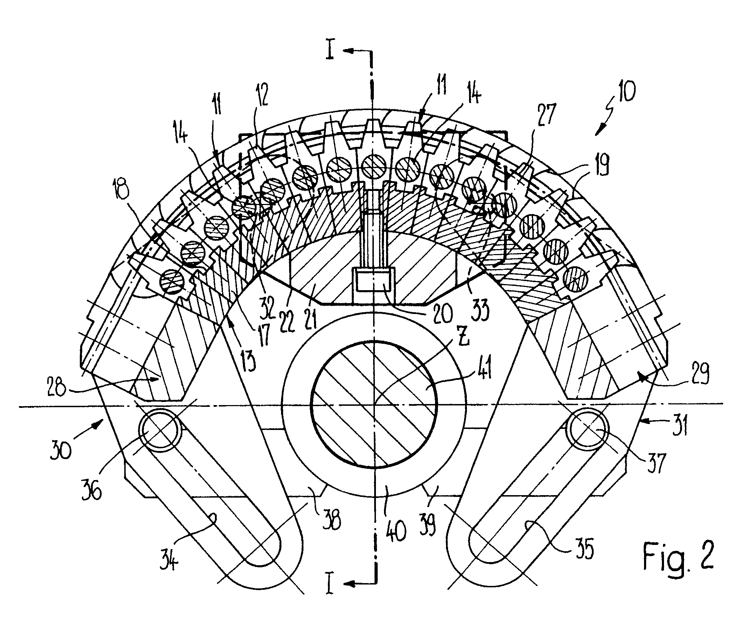

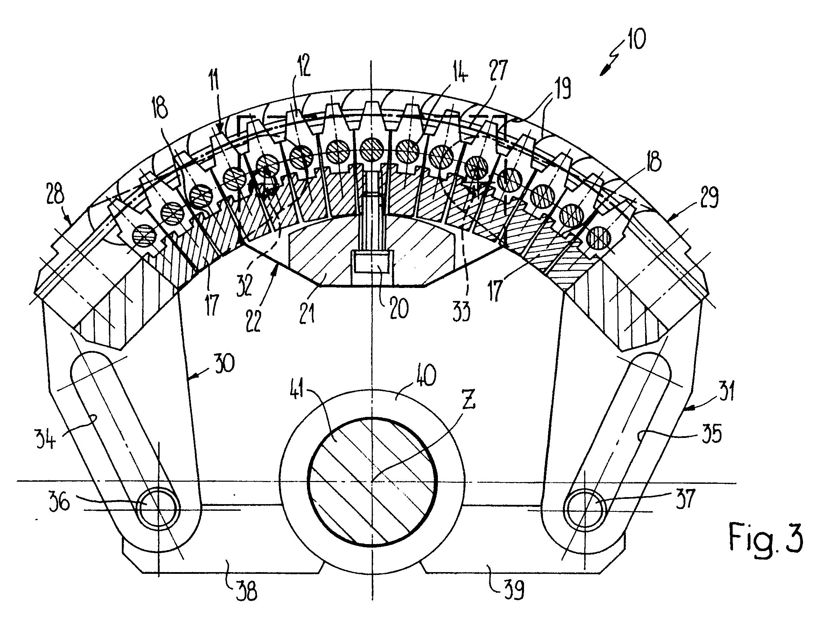

Zunächst sei auf die Fig. 1-3 Bezug genommen. Das in diesen Figuren beispielsweise dargestellte Zahnsegment 10 weist fünfzehn Zahnelemente 11 auf, von denen jedes einen Zahn 12 trägt. Jedes der Zahnelemente 11 ist in einem Trägerteil 13 verankert, das im radialen Querschnitt (Fig. 1) im wesentlichen U-förmig ist. Zur Verankerung des Zahnelementes 11 in seinem Trägerteil 13 dient zum einen ein Stift 14, der das Zahnelement 11 durchsetzt und mit seinen Enden in den Schenkeln 15,16 (Fig. 1) des zugeordneten Trägerteils verankert ist. Zum anderen ist jedes Zahnelement 11, wie aus Fig. 2 und 3 hervorgeht, an der Innenseite des Joches 17 des zugeordneten Trägerteiles 13 mit einer Nut- und -Federverbindung 18 verbunden. Somit ist jedes Zahnelement 11 in jeder Richtung formschlüssig im zugeordneten Trägerelement 13 verankert. Es bleibt zu bemerken, dass die Zahnelemente auch zwei oder mehrere Zähne aufweisen können.

Wie insbesondere den Fig. 2 und 3 zu entnehmen ist, besitzen die Schenkel 15,16 der Trägerteile 13 Seitenflächen in Form eines Zylindersektors 19, so dass sie, stets flächig aneinanderliegend, beschränkt inbezug aufeinander verschwenkbar sind. Ausserdem besitzt das Joch 17 jedes der Trägerteile 13 einen zum Mittelpunkt Z des Kreisbogens hin sich in der Art eines Keiles verjüngenden Querschnitt.

Das mittlere der Trägerteile 13 und damit das von diesem getragene Zahnelement 11 ist mittels Bolzen 20 starr an einem Ausleger 21 eines Verstellelementes 22 befestigt. Auf dieses Verstellelement 22 wird noch zurückzukommen sein.

Die Schenkel 15,16 der Trägerteile 13 sind an ihren einander zugekehrten Seiten mit Nuten 23,24 versehen, durch die je ein gespanntes, biegsames Kopplungselement beispielsweise in Form von einem Stahlband 25,26 gezogen ist. Dieses Stahlband verläuft etwa auf der Höhe des in Fig. 2 und 3 strichpunktiert angegebenen Teilkreises 27 der Zahnelemente 11. Die Enden der Stahlbänder 25,26 sind je in einem Endstück 28,29 fest verankert, an denen die äussersten Trägerteile 13 satt anliegen.

Die Endstücke 28,29 weisen je ein an ihnen angeformtes Winkelstück 30,31 auf, die in Fig. 2 und 3 nur teilweise sichtbar sind. Der nicht sichtbare Teil dieser Winkelstücke 30,31 ist gestrichelt angegeben. Der eine Arm der Winkelstücke 30,31 ist mittels eines Zapfens 32,33 am Verstellelement 22 angelenkt. Der andere Arm der Winkelstücke 30,31 ist mit einem Langloch 34,35 versehen, wobei in jedes dieser Langlöcher 34,35 ein ortsfest angeordneter Stift 36,37 eingreift. Die Stifte 36,37 sind je am Ende eines Auslegers 38,39 befestigt, die ihrerseits von einer Hülse 40 ausgehen, durch die sich eine drehbare Welle 41 erstreckt. Federringe 42 (Fig. 1) hindern die Hülse 40 daran, sich entlang der Welle 41 zu verschieben und die Stifte 36,37 verhindern eine Verdrehung der Hülse mit der Welle 41.

Wird nun das Verstellelement 22 von der in Fig. 1 und 2 gezeigten Lage radial vom Mittelpunkt Z entfernt, so wird damit nicht nur das mittlere Zahnelement 11 vom Mittelpunkt Z entfernt, sondern es werden die Endstücke 28,29 durch das Zusammenwirken der Stifte 36,37 mit den Langlöchern 34,35 zu einer Schwenkbewegung veranlasst, und zwar in Fig. 2 das Endstück 28 im Uhrzeigersinn und das Endstück 29 im Gegenuhrzeigersinn. Dadurch ergibt sich eine Vergrösserung des Radius des vom Zahnsegment 10 beschriebenen Kreisbogens, wobei aber die Bogenlänge dieses Kreisbogens konstant bleibt, wegen der konstanten Länge der beiderends in den Endstücken 28,29 fest verankerten Stahlbänder 25,26.

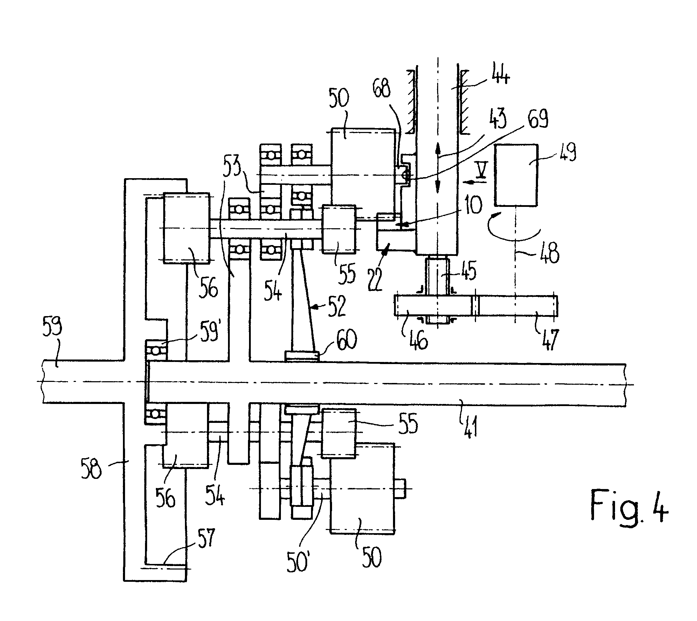

Ein Getriebe, bei dem das Zahnsegment 10 der Fig. 1-3 zweckmässig angewendet werden kann, ist in den Fig. 4-6 schematisch dargestellt. Man erkennt in Fig. 4 sehr schematisch das Zahnsegment 10 und das diesem zugeordnete Verstellelement 22. Das Verstellelement 22 ist an einer im Sinne des Doppelpfeiles 43 achsial verschiebbaren Hubstange 44 befestigt, die an ihrem unteren Ende mit einer Gewindespindel 45 versehen ist. Mit der Gewindespindel 45 wirkt ein drehbares, jedoch achsial nicht verschiebbares Mutterstück 46 zusammen, das aussen wie ein Stirnzahnrad verzahnt ist. Mit diesem Mutterstück 46 kämmt ein Zahnrad 47, das auf der Abtriebswelle 48 eines Schrittmotors 49 sitzt.

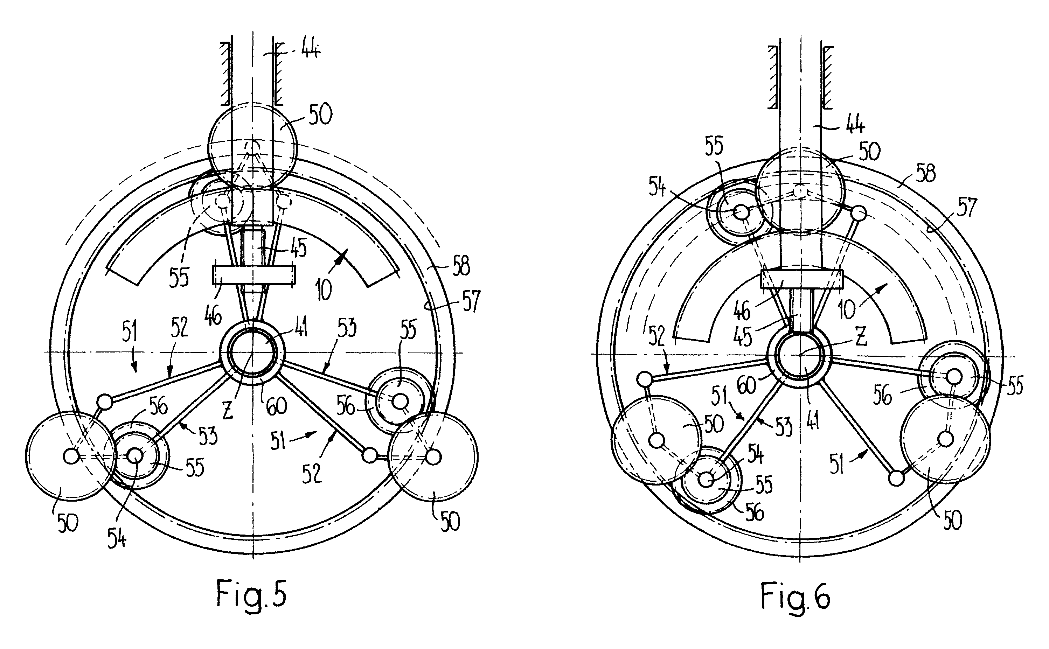

Mit dem Zahnsegment 10 in Fig. 4 kämmt eines von drei Planetenrädern 50. Diese Planetenräder 50 sind, wie aus Fig. 5 und 6 hervorgeht, je am Ende eines Auslegers 51 drehbar gelagert. Jeder dieser Ausleger weist hier zwei gleiche, jedoch gegensinnig geknickte Kniehebel 52,53 auf (Fig. 5).

Im Kniegelenk jedes der Kniehebel 53 ist eine Welle 54 (Fig. 4) drehbar gelagert, auf der einerends ein mit dem am Ende des Kniehebels 52,53 vorhandenen Planetenrad 50 kämmendes Zahnrad 55 und andernends ein weiteres Zahnrad 56 festsitzt. Diese Zahnräder 56 stehen im Eingriff mit der Innenverzahnung 57 eines Abtriebsrades 58, das über ein Kugellager 59' auf dem Ende der Welle 41 drehbar gelagert ist, und von dem eine Abtriebswelle 59 ausgeht. Das innere Ende des Kniehebels 53 ist fest mit der Welle 41 verbunden. Das innere Ende des im Vergleich zum Kniehebel 53 gegensinnig geknickten Kniehebels 52 geht dagegen von einer Buchse 60 aus, die drehbar auf der Welle 41 gelagert ist.

In Fig. 4 ist das Getriebe in derselben Stellung wie in Fig. 5 gezeigt. In dieser Stellung umspannt das Zahnsegment einen Zentriwinkel von 120°. Ebenso beträgt der Umfangsabstand zwischen zwei Planetenrädern 50 120°. Es ist also stets eines der Planetenräder 50 im Eingriff mit dem Zahnsegment 10. Wenn nun durch Verdrehung des Mutterstückes 46 der Abstand des Zahnsegmentes 10 zum Mittelpunkt Z bzw. zur Axe der Welle 41 verringert wird, so verringert sich nicht nur der Radius des vom Zahnsegment beschriebenen Kreisbogens, sondern es folgt dem Zahnsegment 10 auch das mit ihm in Eingriff stehende Planetenrad 50, weil ein vom Planetenrad 50 abstehender Stummel 68 in eine Nutenbahn 69 eingreift, die in einer radial abstehenden Verlängerung des einen Schenkels jedes der Trägerteile 13 (Fig. 1) ausgebildet ist. Dadurch verstärkt sich die Knickung des dieses Planetenrad tragenden Kniehebels 52,53, und weil die Kniehebel 52 über die Buchse 60 einerseits und die Kniehebel 53 über die Welle 41 andererseits starr miteinander verbunden sind, verstärkt sich auch die Knickung jener Kniehebel, deren Planetenrad 50 im Moment nicht im Eingriff mit dem Zahnsegment 10 steht. Es sei in Fig. 4 und 5 angenommen, das Segment habe einen Radius von 80 mm. Dies entspricht einem Wälzkreisdurchmesser von 160 mm. Für die Planetenräder 50 sei ein Durchmesser von 40 mm und für die Zahnräder 55 ein solcher von 20 mm angenommen. Eine Umdrehung der Antriebswelle 41 im Gegenuhrzeigersinn hat zur Folge, dass die Planetenräder 50 fünf Umdrehungen, nämlich vier durch Abwälzung und eine durch die Umlaufbewegung (im Gegenuhrzeigersinn) ausführen, weil die Planetenräder 50 ja über die Innenverzahnung 57 aneinander gekoppelt sind. Die fünf Umdrehungen der Planetenräder 50 haben sieben Umdrehungen für Zahnräder 55 und 56 im Uhr zeigersinn (nämlich zehn im Uhrzeigersinn wegen dem Eingriff mit dem Planetenrad 50 minus drei wegen der Umlaufbewegung im Gegenuhrzeigersinn des Zahnrades 55 um das Planetenrad 50) zur Folge. Angenommen, das Ubersetzungsverhältnis zwischen den Zahnrädern 56 und der Innenverzahnung 57 sei 1:6, dann wird diese zu zwei Sechstel oder einer drittel Umdrehung im Uhrzeigersinn angetrieben.

Wird dagegen der Radius des Segmentes 10 auf 60 mm verringert (Fig. 6), entspricht dies einem Wälzkreisdurchmesser von 120 mm. Eine Umdrehung der Welle 41 im Gegenuhrzeigersinn bewirkt vier Umdrehungen im Gegenuhrzeigersinn der Planetenräder 50 (drei Umdrehungen durch Abwälzung plus eine wegen der Umlaufbewegung). Dies hat fünf Umdrehungen im Uhrzeigersinn (nämlich acht im Uhrzeigersinn minus drei wegen der Umlaufbewegung im Gegenuhrzeigersinn) der Zahnräder 55 und 56 zur Folge. Damit wird auf die Innenverzahnung 57 keine Drehbewegung übertragen, die Abtriebswelle 59 steht still.

Die Verstellung des Übersetzungsverhältnisses des oben beschriebenen Getriebes kann auch während des Laufes erfolgen, ist jedoch in dem Moment durchzuführen, da nur eines der Planetenräder 50 im Eingriff mit dem Segment 10 steht und in einer Stufe, die einer Vermehrung (oder Verminderung) der Zähne des durch das Segment 10 simulierten Zahnrades um eine Einheit entspricht.

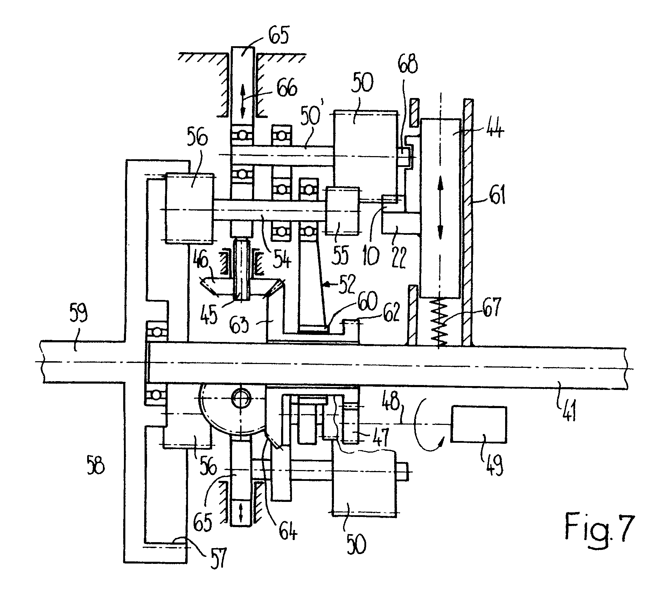

Das in Fig. 7 gezeigte Getriebe ist gegenüber demjenigen der Fig. 4-6 sozusagen invers. Hier läuft das Zahnsegment 10 um, da die Hubstange 44 in einem fest mit der Welle 41 verbundenen Führungsrohr 61 verschiebbar ist. Die Plane tenräder 50 laufen nicht um. Die Verstellung des Zahnsegmentes 10, d.h. die Veränderung dessen Abstandes von der Axe der Welle 41 erfolgt indirekt, jedoch wieder durch den Schrittmotor 49. Dessen Abtriebszahnrad 47 steht mit der Stirnverzahnung 62 eines auf der Welle drehbar gelagerten Doppelzahnrades 63 in Eingriff, auf dessen Nabe die Buchse 60 drehbar gelagert ist. Die andere Verzahnung des Doppelzahnrades 63 ist eine Kegelverzahnung 64, die im steten Eingriff mit dem hier ebenfalls eine Kegelverzahnung tragenden Mutterstück 46 ist. Es sind hier drei Mutterstücke 46 vorhanden. Das Mutterstück 46 wirkt über die Gewindespindel 45 auf eine Hubstange 65, die in ortsfesten Führungen im Sinne des Doppelpfeiles 66 verschiebbar ist. In der Hubstange 65 ist die Welle 50' des Planetenrades 50 gelagert, dessen Abstand von der Axe der Welle 41 damit veränderbar ist. Das Zahnsegment 10 folgt z.B. durch die Wirkung einer Druckfeder 67 der jeweiligen Lage der Planetenräder 50.

## Ansprüche

1. Kreisbogenförmiges Zahnsegment, gekennzeichnet durch einzelne, aufeinanderfolgend angeordnete und mindestens einen Zahn (12) tragende Zahnelemente (11), die durch mindestens ein gespanntes, zugfestes, biegsames und einen Kreisbogen beschreibendes Kopplungselement (25,26) zusammengehalten sind, das mit seinen Enden je in einem Endstück (28,29) verankert ist, und dass Mittel (22,30,31,34-37) vorgesehen sind, um den Abstand der Endstücke (28,29) vom Mittelpunkt (Z) des Kreisbogens und damit dessen Radius zu verändern.

2. Zahnsegment nach Patentanspruch 1, dadurch gekennzeichnet, dass jedes Zahnelement (11) in einem Trägerteil (13) verankert ist, und dass die Trägerteile (13) vom Kopplungselement (25,26) durchsetzt sind.

3. Zahnsegment nach Patentanspruch 2, dadurch gekennzeichnet, dass die Trägerteile (13) U-förmig sind, und dass je ein Zahnelement (11) zwischen den beiden Schenkeln (15,16) des Trägerteiles (13) verankert ist.

4. Zahnsegment nach Patentanspruch 3, dadurch gekennzeichnet, dass zwei Kopplungselemente (25,26) vorgesehen sind, wobei jedes dieser Kopplungselemente einen der Schenkel (15,16) jedes der Trägerteile (13) auf der Höhe des Teilkreises (27) jedes der Zahnelemente (11) durchsetzt.

5. Zahnsegment nach einem der Patentansprüche 1 bis 4, dadurch gekennzeichnet, dass jedes Endstück (28,29) an einem Winkelstück (30,31) befestigt ist, dessen einer Arm an einem bezüglich des Mittelpunktes des Kreisbogens radial verschiebbaren Verstellelement (22) angelenkt ist, während der andere Arm mit einem Langloch (34,35) versehen ist, in das ein bezüglich des Mittelpunktes (Z) ortsfester Stift (36,37) greift.

6. Zahnsegment nach Patentanspruch 5, dadurch gekennzeichnet, dass das Verstellelement (22) starr mit dem mittleren der Zahnelemente (11) verbunden ist.

7. Zahnsegment nach einem der Patentansprüche 2 bis 4, dadurch gekennzeichnet, dass jedes Zahnelement (11) mit einer Feder- und -Nut-Passung (18) im zugeordneten Trägerteil (13) befestigt ist.

8. Zahnsegment nach Patentanspruch 3 oder 7, dadurch gekennzeichnet, dass jedes Zahnelement (11) mittels eines Stiftes (14) zwischen den Schenkeln (15,16) des zugeordneten Trägerteiles (13) befestigt ist.

9. Zahnsegment nach einem der Patentansprüche 1 bis 7, dadurch gekennzeichnet, dass das Kopplungselement (25,26) durch ein Stahlband gebildet ist.

10. Zahnradgetriebe mit veränderbarem Übersetzungsverhältnis, mit einem Satz Planetenräder (50) und mindestens einem Zahnsegment (10) gemäss einem der Patentansprüche 1 bis 9, wobei die Planetenräder (50) und das Zahnsegment (10) inbezug aufeinander in Umlauf bring bar sind, und die Anordnung derart ist, dass stets mindestens ein Planetenrad (50) mit dem Zahnsegment (10) in Eingriff steht, und wobei von jedem Planetenrad (50) ein zu einem Abtriebsrad (58) führender Getriebezug (55,56) ausgeht, dadurch gekennzeichnet, dass ein Verstellmechanismus (46,45,44,22) vorgesehen ist, mittels welchem der Abstand der Endstücke (28,29) des Zahnsegmentes (10) vom Mittelpunkt (Z) des Kreisbogens veränderbar ist.

11. Zahnradgetriebe nach Patentanspruch 10 mit einem Zahnsegment (10) gemäss Patentanspruch 5, dadurch gekennzeichnet, dass die in das Langloch (34,35) im anderen Arm jedes der Winkelstücke (30,31) eingreifenden Stifte (36,37) je an einem von einer Hülse (40) ausgehenden Ausleger (38,39) befestigt ist, und dass die Hülse (40) auf einer mit ihrer Achse durch den Mittelpunkt (Z) des Kreisbogens führenden Welle (41) gelagert ist.

12. Zahnradgetriebe nach Patentanspruch 10, dadurch gekennzeichnet, dass jedes Planetenrad (50) am einen Ende eines Auslegers (51) gelagert ist, der in Form von zwei gleichen, jedoch gegensinnig geknickten Kniehebeln (52,53) ausgebildet ist, wobei im Kniegelenk des einen Kniehebels (53) ein mit dem Planetenrad (50) in Eingriff stehendes Zahnrad (55) drehbar gelagert ist, und wobei das andere Ende des einen Kniehebels (53) fest mit einer Antriebswelle (41) verbunden ist, während das andere Ende des anderen Kniehebels (52) von einer auf der Antriebswelle (41) drehbar gelagerten Büchse (60) ausgeht.

13. Zahnradgetriebe nach Patentanspruch 10, dadurch gekennzeichnet, dass der Verstellmechnismus eine Gewindespindel (45) aufweist.

14. Zahnradgetriebe nach Patentanspruch 13, dadurch gekennzeichnet, dass zur Betätigung der Gewindespindel ein Schrittmotor (49) vorgesehen ist.

Fig. 1

EP 0 396 978 A1

Fig. 2

EP 0 396 978 A1

Fig. 3

Fig. 4

Fig.5

Fig.6

Fig. 7

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 619 184 (M. MAREAU) * Zusammenfassung; Ansprüche 1,8; Figuren 1,3 * | 1,4,5, 10 | F 16 H 55/17 F 16 H 3/76 |
| | --- | | |
| A | GB-A-2 135 743 (M. DEAL) * Zusammenfassung; Figuren 6,7 * | 1,10 | |
| | --- | | |
| A,D | EP-A-0 248 289 (BRAUNSCHWEILER) * Das ganze Dokument * | 10 | |
| | --- | | |
| A | WO-A-8 803 624 (CATERPILLAR INC.) * Zusammenfassung; Figur 2 * | 2,3,8 | |
| | --- | | |
| A | GB-A- 954 332 (COMPAGNIE DES TRANSMISSIONS MECANIQUES SEINE-DOUBLE-ISERE) * Zusammenfassung; Figuren 5,8 * | 2,3,5 | |
| | --- | | |
| A | US-A-3 996 814 (WESTLAKE) * Zusammenfassung; Figuren 3,5 * | 2,3 | |
| | ----- | | |

|  |
|---|
| RECHERCHIERTE SACHGEBIETE (Int. Cl.5) |
| F 16 H B 62 M |

Der vorliegende Recherchenbericht wurde für alle Patentansprüche erstellt

| Recherchenort | Abschlußdatum der Recherche | Prüfer |
|---|---|---|
| DEN HAAG | 15-06-1990 | VINGERHOETS A.J.L. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes Dokument